Europäisches Patentamt

European Patent Office

Office européen des brevets

(11) Publication number: 0 400 964 A2

## (12) EUROPEAN PATENT APPLICATION

(21) Application number: 90305828.7

(51) Int. Cl.5: C08L 77/00, C08L 51/06

(22) Date of filing: 29.05.90

(30) Priority: 30.05.89 US 358585

(43) Date of publication of application:
05.12.90 Bulletin 90/49

(84) Designated Contracting States:
AT BE CH DE DK ES FR GB GR IT LI LU NL SE

(71) Applicant: HOECHST CELANESE CORPORATION
Route 202-206 North
Somerville, New Jersey(US)

(72) Inventor: Yu, Thomas C.
54 Susan Drive
Chatham, New Jersey(US)

(74) Representative: De Minvielle-Devaux, Ian
Benedict Peter et al
CARPMAELS & RANSFORD 43, Bloomsbury
Square
London WC1A 2RA(GB)

(54) Heat and impact resistant polyamide compositions.

(57) Molding resins made from blends of nylon, styrene-acrylonitrile copolymers grafted onto ethylene propylene copolymer rubbers, and EPDM elastomers modified with maleic anhydride exhibit excellent heat sag resistance, low temperature ductility, excellent impact resistance and reduced water absorption levels.

EP 0 400 964 A2

## EP 0 400 964 A2

## Heat and Impact Resistant Polyamide Compositions

### Background of the Invention

The field of art to which this invention pertains is thermoplastic molding compositions made from blends of thermoplastic resins.

The blending or alloying of polymers and resins is a well known procedure for modifying and improving the properties of the individual polymers. By proper blending procedures and judicious choice of polymers, molding resins can be tailored for specific end uses.

Automotive engineers are constantly looking for new structural materials to replace metals in various parts of automobiles, such as the interior and exterior panels. For such uses, the plastic materials must have excellent toughness, impact resistance and heat resistance to withstand on-line painting and baking procedures. The materials should also have good dimensional stability, low moisture absorption and good weatherability.

Polyamide resin, or nylon, is an excellent material of construction, exhibiting toughness and heat resistance. However, for some uses, the impact resistance is poor and the water absorption is too high. In order to improve these properties, nylon has been blended with various polymeric modifiers.

U.S. Patent No. 3,845,163 describes toughening polyamides by blending with an olefin-acid copolymer.

The impact strength and toughness of polyamides are improved by blending the polyamide with maleic anhydride grafted EPM rubbers as described in U.S. Patent No. 4,594,386.

In U.S. Patent No. 4,593,066, the impact resistance of polyamide resins is improved by blending with the polyamide resin an EPDM elastomer grafted with a polymer of styrene and acrylic acid.

High impact polyamide molding resin compositions, as described in U.S. Patent No. 4,320,213, are made from a polyamide resin, a hydroxy-functional elastomer and a coupling agent which is a polymer containing succinic acid functionality.

Blends of polyamide resins with neutralized sulfonated ethylene propylene diene rubbers are described in U.S. Patent Nos. 4,448,934 and 4,529,776. Neutralized sulfonated ethylene propylene diene rubbers adducted with maleic anhydride are used as impact modifiers for polyamide resins in U.S. Patent No. 4,544,702.

Constant efforts are being made in research and development to improve the properties of molding resins by blending and alloying procedures.

### Summary of the Invention

This invention is directed to thermoplastic resin alloys or blends. In one aspect, this invention relates to polyamide resin blends. In another aspect, this invention pertains to polyamide resins blended with impact modifiers.

The compositions of this invention are blends of (1) a polyamide, (2) a styrene-acrylonitrile copolymer grafted onto an ethylene-propylene copolymer rubber spine, and (3) an EPDM elastomer reacted with maleic anhydride. Component (1) is a condensation polymer of an aliphatic dicarboxylic acid and an alkylene diamine. Component (2) is the graft polymerization product of styrene and acrylonitrile polymerized in the presence of a copolymer of ethylene and propylene rubber. Component (3) is an ethylene, propylene, diene monomer terpolymer reacted with about 0.2 to about 1 weight percent maleic anhydride. The three components are present in the blend in the amount of about 60 to about 80 weight percent of (1), about 10 to about 30 weight percent of (2), and about 10 to about 20 weight percent of (3), said weight percents being based on the total weight of (1), (2), and (3).

The molded compositions of this invention exhibit excellent heat sag resistance, low temperature ductility, excellent impact resistance, and reduced water absorption levels.

### Description of the Invention

The polyamides useful in this invention are of the nylon type, the use of which as molding resins and as

2

fibers is well known. The polyamide resins are generally produced by condensing a saturated dicarboxylic acid containing from 2 to 10 carbon atoms with an alkylene diamine in which the alkylene groups contain from 2 to 10 carbon atoms. Examples of such polyamides include polyhexamethylene adipamide (nylon 6,6), polyhexamethylene sebacamide (nylon 6,10) and the polyamide produced by the self condensation of caprolactam (nylon 6). Useful polyamides have melting points about 200° C and, preferably, above 250° C. The relative viscosities of such polyamides, particularly for nylon 6,6, as measured in 90 percent formic acid at 11 weight percent polyamide, are 30 to 350 and, preferably, 40 to 60.

The graft copolymer useful in this invention is based on a graft copolymer of resin-forming monomeric material on an olefin copolymer rubber spine, usually a copolymer of ethylene and propylene (EPR). The olefin copolymer can be a binary copolymer containing only ethylene and propylene (saturated EPM) or a copolymer of ethylene, propylene and another monomer, such as the unsaturated terpolymers, ethylene-propylene-non-conjugated diene terpolymers (EPDM, wherein ethylidene norbornene, dicyclopentadiene and 1,4-hexadiene are examples of the third monomer), or terpolymers containing other monomers, such as phenyl norbornene.

The graft copolymers are made by graft copolymerizing styrene and acrylonitrile onto an olefin copolymer rubber spine as described in U.S. Patent No. 4,202,948, and 3,489,822 as well as U.S. Patent Nos. 4,485,212 and 4,493,921. The amount of styrene and acrylonitrile in the graft copolymers useful in this invention ranges from about 35 to about 60 percent by weight based on the total weight of monomers plus rubber spine. The ratio of styrene to acrylonitrile ranges from about 90:10 to about 60:40 by weight.

It will be understood that in practice the product of the graft copolymerization process is actually a mixture of true graft of resin on rubber along with a certain amount of separate ungrafted resin (the grafting efficiency is not 100 percent). If desired, additionally separately prepared styrene-acrylonitrile resin may be added to the graft copolymer composition.

The olefin copolymer which is used as the rubbery spine contains ethylene and propylene in the molar ratio of between about 20:80 to about 80:20 and, preferably, about 35:65 to about 65:35. The preferred copolymers are those which contain a diene monomer in the amount of about 1 to about 10 weight percent, preferably about 2 to about 6 weight percent, based on the total weight of the graft copolymer. The diene monomer is a non-conjugated straight chain or cyclic diene hydrocarbon which contains five to 20 carbon atoms. Examples of such diene monomers are 1,4-pentadiene, 1,4-hexadiene, 1-5-hexadiene, 1,7-octadiene, 1,19-ercosadiene, 7-methyl-1,6-octadiene, dicyclopentadiene, tricyclopentadiene, ethylidene norbornene, methylene norbornene and the like. Preferred diene monomers are ethylidene norbornene, dicyclopentadiene and 1,4-hexadiene.

The maleic anhydride modified EPDM elastomers useful in this invention are described in detail in U.S. Patent No. 3,884,882 which is hereby incorporated by reference. The EPDM elastomer is an ethylene, propylene, diene monomer terpolymer as described hereinbefore. Such EPDM elastomers have number average molecular weights of at least about 5000. Elastomers having number average molecular weights of about 10,000 to about 200,000 are generally preferred. The EPDM rubbers contain about 35 to about 80 weight percent ethylene, about 18 to about 55 weight percent propylene and about 2 to about 10 weight percent diene monomer. The preferred elastomer contains about 48 to about 77 weight percent ethylene and about 23 to about 52 weight percent propylene with the diene monomer being about 2.5 to about 9.8 weight percent based on the weight of ethylene and propylene. The preferred diene for use in making these EPDM elastomers is ethylidene norbornene.

The maleic anhydride modification of the EPDM elastomers is about 0.2 to 1 weight percent maleic anhydride and, preferably, about 0.4 to about 0.6 weight percent, said weight percents being based on the total weight of the modified elastomers. The maleic anhydride is reacted with the EPDM rubber by a process using the procedure described in U.S. Patent Nos. 3,884,882 and 4,578,429 which are hereby incorporated by reference.

In preparing blended compositions of this invention, the components are blended in the amounts of about 60 to about 80 weight percent polyamide, about 10 to about 30 weight percent graft copolymer of styrene and acrylonitrile on EPR rubber elastomer and about 10 to about 20 weight percent maleic anhydride modified EPDM elastomer.

The molding compositions of this invention are prepared by any conventional mixing method. For example, one method comprises mixing the three components in powder or granulated form in an extruder, extruding the mixture into strands, chopping the strands into pellets and molding the pellets into the desired article. The mixing and blending operation is conducted at a temperature above the melting point of the polyamide, generally at a temperature of about 260° C to about 300° C.

Additional additives which are well known to those skilled in the art can be included in with the present compositions. Such additives include plasticizers, pigments, flame retardants, reinforcing agents, thermal stabilizers, processing agents and the like.

The following examples describe the invention in more detail. Parts and percentages, unless otherwise identified are parts and percentages by weight.

## Example 1

A polyamide (nylon 6,6) having a melting point of 265°C, a graft copolymer of styrene and acrylonitrile on an EPDM elastomer (Rovel 701 - Dow Chemical Co.) and an EPDM elastomer reacted with 0.5 weight percent maleic anhydride (Uniroyal X465) were compounded on a 28 mm ZSK compounding extruder at temperatures of 240°C - 280°C, at a screw speed of 150 - 200 rpms at a torque of 600 - 800 inch pounds. Test specimens were injection molded using a 2 ounce Arbury at a temperature of 280°C - 300°C. The amounts of each component used in preparing blends and the physical properties of the blended molded resins are shown in Table 1.

Heat sag as shown in the table was measured by first clamping the tensile specimen in a jig with a 6 inch overhang. The vertical distance between the end of the freely suspended test bar and the jig platform was then measured. The jig was put inside a circulating oven at 193°C for 30 minutes. The change in vertical span between the free end of the test bar and the jig platform immediately after exposure, was recorded as heat sag. A heat sag of less 15mm is usually considered to be good.

Water absorption was determined according to ASTM D-570 by immersing the samples in water at room temperature (23 ± 1°C) for 24 hours.

Ductility was determined with a Rheometric Drop Tester using 2 inch by 1/8 inch injection molded disks. The weight of the test bar was 33 pounds. The dart speed upon impact was set to be 132 inches per second. The disks were cooled with liquid nitrogen to -20°C and -40°C. The temperature listed in the table indicates the temperature at which the sample passed the ductility test, i.e., allowed the dart to penetrate without shattering.

Table I

| Composition | Blend A | Blend B | Nylon |
|---|---|---|---|
| Nylon | 65 | 75 | 100 |
| Rovel 701 | 20 | 10 | |
| Uniroyal 465 | 15 | 15 | |
| Properties | | | |
| Tensile at Yield, PSI | 7,600 | 8,500 | |
| Tensile at Break, PSI | 6,600 | 7,300 | 9,500 |
| Elong at Break % | 23 | 23 | 60 |
| Flexure Stress, PSI | 10,100 | 11,400 | 17,100 |
| Flexure Modulus, PSI x $10^5$ | 2.8 | 3.8 | 4.2 |
| Heat Sag at 193 °C, mm | 7.5 | 10.3 | 5 |
| Heat Distortion at | | | |
| 66 PSI °C | 216 | 313 | |
| 264 PSI °C | 147 | 149 | 170 |
| Specific Gravity | 1.08 | 1.11 | |
| Water Absorption % | 0.64 | 0.75 | 1.5 |
| Notched Impact, Ft-lbs in | | | |
| RT | NB | 11.8 | 1.0 |
| -40 °C | 1.25 | 1.78 | |
| Practical Impact | | | |
| Peak Force, lbs | 774 | 844 | |
| Energy in-lbs | 361 | 388 | |
| Ductility | -20 °C | -40 °C | |

The principles, preferred embodiments and modes of operation of the present invention have been described in the foregoing specification. The invention which is intended to be protected herein, however, is not to be construed as limited to the particular forms disclosed, since these are to be regarded as illustrative rather than restrictive. Variations and changes may be made by those skilled in the art without departing from the spirit of the invention.

**Claims**

1. A molding composition comprising a blend of:
(a) a polyamide;
(b) a styrene-acrylonitrile copolymers grafted onto an ethylene, propylene copolymer rubber; and
(c) a maleic anhydride modified ethylene, propylene, diene monomer elastomer
wherein (a) is a condensation polymer of an aliphatic dicarboxylic acid and an alkylene diamine, (b) is made by copolymerizing styrene and acrylonitrile in the presence of an ethylene, propylene copolymer rubber, and (c) is an ethylene, propylene, diene monomer elastomer reacted with about 0.2 to about 1 weight percent maleic anhydride wherein (a), (b) and (c) are present in the blend in the amount of about 60 to about 80 weight percent of (a), about 10 to about 30 weigh percent of (b) and about 10 to about 20 weight percent of (c), wherein said weight percents are based on the total weigh of (a), (b) and (c).

2. The composition of Claim 1 wherein the polyamide is the reaction product of hexamethylenediamine and adipic acid.

3. The composition of Claim 1 wherein the polyamide is a homopolymer of caprolactam.

4. The composition of Claim 1 wherein the styrene-acrylonitrile copolymer grafted onto an ethylene, propylene copolymer rubber is made from an EPDM elastomer, wherein the ethylene to propylene molar ratio is about 20:80 to about 80:20, and wherein the diene monomer is present in the amount of about 1 to about 10 weight percent based on the weight of the EPDM elastomer.

5. The composition of Claim 4 wherein the ethylene to propylene molar ratio is about 35:65 to about 65:35 and the diene monomer is present in the amount of about 2 to about 5 weight percent.

6. The composition of Claim 1 wherein the styrene and acrylonitrile are present in the graft copolymer in the weigh ratio of about 80:20 to about 20:80 and wherein the weight ratio of styrene and acrylonitrile to EPDM terpolymer is about 70:30 to about 30:70.

7. The composition of Claim 6 wherein the styrene to acrylonitrile weight ratio is about 70:30 to about 50:50.

8. The composition of Claim 1 wherein the maleic anhydride modified EPDM elastomer contains about 0.4 to about 0.6 weight percent maleic anhydride.

9. The composition of Claim 1 wherein the EPDM elastomer in the maleic anhydride modified EPDM elastomer contains about 35 to about 80 weight percent ethylene, about 18 to about 55 weight percent propylene and about 2 to about 10 weight percent diene monomer, said weight percents being based on the weight of EPDM elastomer.

10. The composition of Claim 9 wherein the EPDM elastomer contains about 48 to about 77 weight percent ethylene and about 23 to about 52 weight percent propylene with the diene monomer being present in about 2.5 to about 9.8 weight percent based on the weight of ethylene and propylene.

11. The composition of Claim 10 wherein the diene monomer is ethylidene norbornene.

12. A process for producing a molding composition which comprises forming a blend of (a) 60-80 weight % of a polyamide which is a condensation polymer of an aliphatic dicarboxylic acid and an alkylene diamene, (b) 10-30 weight % of a styrene acrylonitrile copolymer grafted onto an ethylene, propylene copolymer rubber made by copolymerising styrene and acrylonitrile in the presence of the rubber, and (c) 10-20 weight % of a maleic anhydride modified ethylene, propylene, diene monomer elastomer, such modification being effected by reacting the elastomer with 0.2 to 1 weight % of maleic anhydride.

13. The process of Claim 12 wherein the three components are mixed in powder or granulated form in an extruder, the mixture is extruded into strands, and the strands are chopped into pellets.

14. The process of Claim 12 or 13 wherein the temperature in the extruder is maintained at 260-300°C.

15. The process of any of Claims 12 to 14 wherein the components are used in accordance with the definitions in any of Claims 2-11.